# FASCICULE DE BREVET EUROPEEN

(11) **EP 2 078 664 B1**
(45) Date de publication et mention de la délivrance du brevet: **28.07.2010**
(21) Numéro de dépôt: 08171708.4
(22) Date de dépôt: 15.12.2008
(51) Int. Cl.: B62D 21/15, B62D 25/04

(54) **Structure de pied avant d'un véhicule automobile**
A-Säulenstruktur eines Kraftfahrzeugs
A-pillar structure of a vehicle

(30) Priorité: 09.01.2008 FR 0850104
(43) Date de publication de la demande: 15.07.2009
(73) Titulaire: PEUGEOT CITROËN AUTOMOBILES S.A., 78140 Vélizy Villacoublay (FR)
(72) Inventeur: Perron, Frédéric Xavier, 92120, MONTROUGE (FR)
(74) Mandataire: Fernandez, Francis Lionel

(56) Documents cités:
- JP-A- 60 092 170
- JP-A- 60 094 874

## Description

La présente invention concerne une structure de pied avant d'un véhicule automobile. On désigne par « structure de pied avant », ou indifféremment par « pied avant », une structure porteuse liant certains profilés du véhicule tels que le soubassement, les montants de baies supportant le pavillon, la doublure d'aile et la porte.

Le domaine de l'invention est d'une façon générale celui de la sécurité des véhicules automobiles et plus particulièrement celui de l'absorption des chocs lors d'un accident.

Lors d'un choc frontal, les efforts générés sur le véhicule se transmettent au travers de toute sa structure vers l'arrière du véhicule, accompagnés d'un écrasement de certains éléments de sa structure afin de dissiper l'énergie cinétique emmagasinée par le véhicule en déplacement. Pour assurer la sécurité des passagers, l'intégrité de l'habitacle doit être préservée à son maximum, limitant ainsi le pliage ou la déformation des éléments de structures ou d'ossature du véhicule.

Les normes toujours plus sévères imposées pour la construction des véhicules automobiles, notamment dans le cas d'un choc frontal, conduisent donc à solliciter de plus en plus les portes latérales afin de leur permettre de participer efficacement à la rigidité de la carrosserie et à assurer une transmission et une absorption convenable de l'effort reçu consécutivement à un choc frontal, sans déformation excessive de la carrosserie et de la porte.

Pour cela, afin d'éviter des efforts excessifs appliqués aux montants de baies et au soubassement de la structure du véhicule, des éléments logés dans les portes latérales du véhicule, appelés « frise de porte », contribuent à cette transmission des efforts ainsi que leur dissipation.

Cependant, pour assurer une bonne transmission de l'effort consécutif à un choc frontal de la structure du véhicule à une zone de renfort de la porte latérale et ainsi répondre aux exigences de sûreté de plus en plus sévère, une zone d'appui de la porte latérale sur la structure du véhicule, matérialisée par une structure de pied avant ne doit subir ni déformation ni rotation suivant un axe vertical, dues à l'effort de compression d'un choc frontal et doit être suffisamment rigide afin de transmettre les efforts.

Il est important de décrire dans un premier temps, le scénario de transmission des efforts afin de bien comprendre l'importance des différents éléments de la structure du véhicule.

La première pièce impactée lors d'un choc frontal, est le renfort avant coté habitacle. Le renfort avant coté habitacle se déforme afin d'absorber une partie des efforts puis transmet les efforts non absorbés du choc frontal au pied avant. Ce dernier comporte notamment un renfort et une doublure d'aile, permettant la transmission et la répartition des efforts sur le montant de baie, la frise de la porte latérale et le soubassement du véhicule, de façon à absorber lesdits efforts.

Il existe déjà des réalisations connues de pied avant permettant une transmission et une répartition des efforts dans les zones constituées par le montant de baie, la frise de porte latérale, et le soubassement.

Ainsi suivant les documents JP-A-60094874 ou encore JP-A-60092170, il est connu une structure de pied avant 2 d'un véhicule automobile comprenant : un renfort, une doublure d'aile avant et un raidisseur, le raidisseur étant monobloc. Chacun desdits documents Japonaises couvre les caractéristiques du préambule de la revendication indépendante 1.

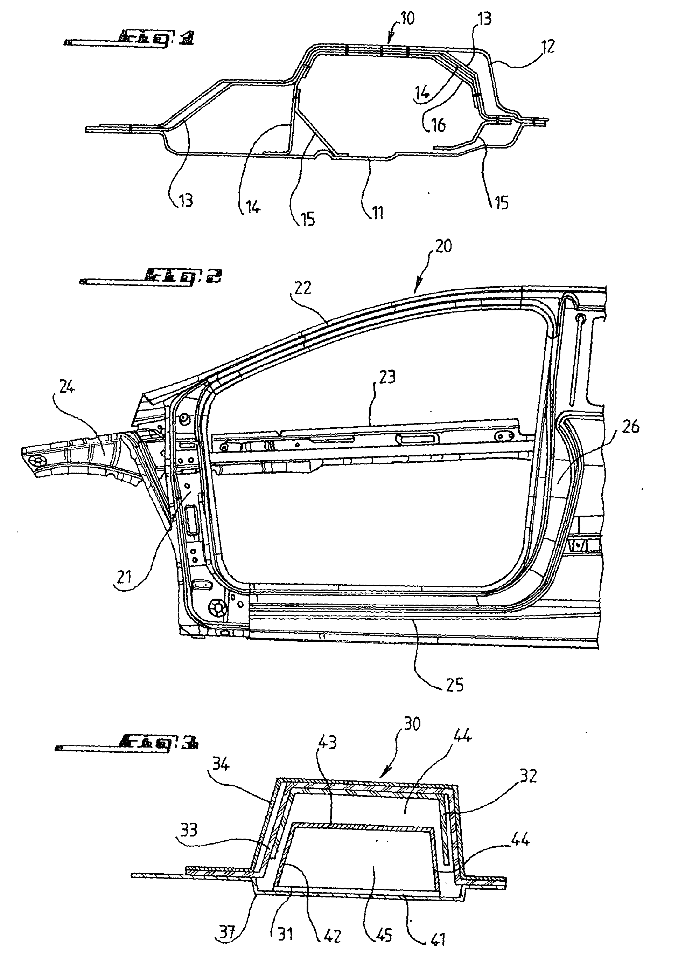

Un autre exemple de structure connue d'un pied avant 10 d'un véhicule automobile, est illustré en référence à la figure 1. La section du pied avant 10 comporte :
- une doublure d'aile avant 11 délimitant une zone intérieure véhicule ;
- un coté habitacle 12 délimitant une zone extérieure véhicule ;
- un renfort 13 soudé au coté d'habitable 12 et à la doublure d'aile 11 ;
- une fermeture pied avant 14, permettant de fermer le renfort 13 et ainsi rigidifier l'ensemble soudé à la doublure d'aile avant 11 ;
- un raidisseur 16 permettant de rigidifier l'ensemble du pied avant 10, soudé à la fermeture pied avant 14 ;
- un renfort de fermeture 15, permettant d'augmenter la raideur de l'ensemble, soudé à la doublure d'aile avant 11 et à la fermeture pied avant 14.

Toutefois, la solution présentée ci-dessus présente certaines difficultés tant en terme de nombre de pièces rentrant en jeu dans la composition de la structure qu'en terme de réalisation de la structure du pied avant lors du ferrage du véhicule. Ainsi, par exemple, le ferrage de la fermeture pied avant 14 et du renfort fermeture 15 sur la doublure d'aile avant 11 est un ferrage relativement complexe à réaliser.

De plus, avec le type de conception montrée à la figure 1, lors d'un choc frontal, la zone délimitée par le renfort 13, la fermeture pied avant 14 et la doublure d'aile avant 11, ne permet pas, ou peu, d'absorber les efforts. Le pied avant 10 ne peut alors absorber ou transmettre une partie des efforts, qu'après la sollicitation de la pièce fermeture pied avant 14.

Dans ces conditions, lors d'un choc frontal, les résultats obtenus avec ce type de conception ne sont plus acceptables par les constructeurs automobiles. Le pied avant 10, pas assez rigide, se déforme et ne répartit pas correctement les efforts entre la zone frise de porte avant, la zone montant de baie et la zone soubassement du véhicule. On obtient alors une déformation du renfort montant de baie et du renfort de longeron dans la zone de soubassement, ce qui ne garantit pas la sécurité des passagers.

Dans ce contexte, l'invention vise à fournir une solution aux problèmes qui viennent d'être exposés.

A cet effet, l'invention propose une structure de pied avant d'un véhicule automobile comprenant :
- un renfort ;
- une doublure d'aile avant ;
- un raidisseur, ledit raidisseur étant monobloc ;
   **caractérisée en ce que** le raidisseur comporte au moins une pliure épousant ladite doublure d'aile avant, coté extérieur du véhicule, et fixée directement à ladite doublure d'aile avant.

On désigne par renfort et raidisseur deux pièces distinctes participant à la rigidification de l'ossature du véhicule, ledit raidisseur assistant le renfort en cas de choc frontal. Outre les caractéristiques principales qui viennent d'être mentionnées dans le paragraphe précédent, la structure de pied avant selon l'invention peut présenter une ou plusieurs caractéristiques supplémentaires parmi les suivantes :
- ladite au moins une pliure est soudée à ladite doublure d'aile avant ;
- le raidisseur comporte une première pliure et une deuxième pliure épousant ladite doublure d'aile avant, coté extérieur du véhicule, et fixées directement à ladite doublure d'aile avant ;
- le raidisseur est composé d'une pluralité de pliures orientée suivant le profil dudit renfort ;
- le raidisseur forme un espace unique avec ladite doublure d'aile avant ;
- le raidisseur est localisé à proximité immédiate dudit renfort ;
- la distance, entre ledit raidisseur et ledit renfort, est inférieure ou égale à 5mm.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention, et dans desquels :
- la figure 1, déjà décrite, est une représentation en section d'un pied avant selon l'état de la technique ;
- la figure 2, est une représentation tridimensionnelle d'une partie de l'ossature d'un véhicule;
- la figure 3 est une représentation en coupe par rapport à un axe vertical du principe de conception du dispositif de renforcement de la structure pied avant selon l'invention ;
- la figure 4 est une représentation tridimensionnelle particulière d'un dispositif de renforcement de la structure pied avant d'un véhicule automobile selon l'invention ;
- la figure 5 est une section de la représentation particulière de la figure 4 selon l'invention.

Dans toutes les figures, les éléments communs portent les mêmes numéros de référence sauf précision contraire.

Les notions de direction et de position, de type "haut", "bas" sont mentionnées dans des conditions classiques de disposition des différents éléments concernés lorsqu'ils sont effectivement mis en place dans un dispositif de renforcement d'une structure pied avant d'un véhicule automobile.

Le repère véhicule mentionné dans les descriptions des différentes figures correspond au repère véhicule connu du domaine automobile. Il est défini par trois axes suivant trois directions qui sont :
- l'axe transversal Y suivant l'axe des roues du véhicule ;
- l'axe longitudinal X suivant la longueur du véhicule orienté vers l'avant du véhicule formant un plan parallèle au sol avec l'axe des Y ;
- l'axe Z vertical, perpendiculaire au plan formé par les axes X, Y.

Un axe charnière correspond à l'axe déterminé par deux points de fixation d'une charnière supérieure et d'une charnière inférieure, l'axe charnière correspondant à l'axe de rotation d'une porte latérale. Cet axe décrit généralement un angle par rapport à l'axe Z du repère véhicule.

La figure 2 est une représentation tridimensionnelle d'une partie 20 de l'ossature d'un véhicule automobile, relative à l'encadrement et à l'appui d'une porte latérale avant. La partie de l'ossature ou structure de caisse 20 est caractérisée par différents éléments remplissant chacun un rôle distinct, qui sont :
- un pied avant 21, comportant des éléments d'appui de la porte latérale ainsi que des éléments de renfort et des éléments d'absorption d'énergie résultant d'un choc frontal ;
- un montant de baie 22 ; le montant de baie 22 est défini par une zone de renfort permettant d'encaisser une première partie des efforts transmis par le pied avant 21 lors d'un choc frontal ;
- un soubassement 25 ; le soubassement 25 est défini par une zone de renfort permettant d'encaisser une deuxième partie des efforts transmis par le pied avant 21 lors d'un choc frontal ;
- une frise de porte avant 23 ; la frise de porte 23 permet d'encaisser une troisième partie des efforts transmis par le pied avant 21. La frise de porte est une pièce de renforcement de la structure de la porte, fonctionnelle lorsque la porte est en position fermée, entre la zone pied avant 21 et une zone pied milieu 26 ;
- un renfort avant coté d'habitacle 24 qui absorbe une partie de l'effort résultant du choc frontal avant de solliciter le pied avant 21 après la déformation dudit renfort avant coté d'habitacle.

La figure 3 est une représentation schématique d'une section du principe de conception d'un pied avant 30 selon l'invention. La section est réalisée suivant un plan perpendiculaire à l'axe charnière de la porte latérale avant du véhicule.

La structure du pied avant 30 selon l'invention simplifie le mode de réalisation de ce type de structure avec une composition mettant en oeuvre 5 pièces seulement, qui sont :
- un coté d'habitacle 34 ;
- un renfort 33 ;
- une doublure d'aile avant 37 ;
- un renfort charnière 32 ;
- un raidisseur 31 ;

La conception présentée, de la structure du pied avant 30, a pour objectif de rigidifier sensiblement la structure pied avant 30 dans le but de garantir une meilleure transmission des efforts sur la zone de frise de porte 23 (figure 2) sans déformation de la structure pied avant et ainsi réduire les déformations de la partie soubassement 25 (figure 2) ou de la partie montant de baie 26 (figure 2) de la structure du véhicule. Le raidisseur 31 est une pièce monobloc réalisée notamment par emboutissage ; on entend par pièce monobloc une pièce unique réalisée notamment sans soudure de raccord. Le raidisseur 31 est fixé avantageusement et directement à la doublure d'aile avant 37 ; on entend par le terme directement le fait que le raidisseur 31 possède une liaison directe avec la doublure d'aile avant 37 sans l'utilisation d'un élément intermédiaire. Ainsi le raidisseur 31 permet une sollicitation du pied avant 30 dès le début du choc frontal augmentant ainsi la rigidité de l'ensemble pied avant 30.

Dans le plan de la section, perpendiculaire à l'axe charnière, illustré pour un point donné de l'axe vertical Z, le raidisseur 31 comporte 4 pliures distinctes. Une première pliure 41 épouse la forme de la doublure d'aile avant 37 afin d'être fixée, généralement par soudure, sur ladite doublure d'aile avant 37. Nous verrons par la suite qu'une deuxième pliure peut également épouser la doublure d'aile dans un plan parallèle au plan de la section.

Le raidisseur 31 comporte également de trois autres pliures 42, 43, 44 formant ainsi un espace fermé 45 avec la première pliure 41 à l'intérieur d'un espace formé par le renfort 33 et la doublure d'aile avant 37. Les pliures 42, 43, 44 sont orientées parallèlement aux différentes pliures du renfort 33, en minimisant un espace 46 entre les pliures du renfort 33 et les pliures du raidisseur 31. Dans certains modes de réalisation, la pièce raidisseur 31 est caractérisée également par d'autres pliures non représentées sur la section.

Le raidisseur 31 est soudé sur la doublure d'aile avant 37, au moyen d'une première pliure 41, à proximité immédiate (on entend par proximité immédiate une proximité inférieure ou égale à 5mm) du renfort 33 créant ainsi un espace limité entre ces deux pièces permettant toutefois, d'interposer un renfort charnière 32 sur le renfort 33.

Par ailleurs, selon l'invention, le corps creux délimité par le renfort, la pièce fermeture pied avant et la doublure d'aile avant, tel qu'utilisé dans les réalisations connues, est supprimé ; ce corps creux ne participant pas efficacement à l'absorption du choc frontal. La pièce fermeture de pied avant délimitant cette zone, est alors supprimée. Le raidisseur 31 est soudé sans ajout de pièces supplémentaires sur la doublure d'aile avant 37 plus en avant que dans les réalisations existantes, et permet donc d'être sollicité dès le début du choc frontal en augmentant la rigidité de l'ensemble pied avant 30.

En plus de la suppression d'une pièce, la conception suivant la figure 3 simplifie avantageusement les opérations de ferrages du pied avant 30 d'un véhicule automobile.

Enfin, une conception suivant la figure 3 autorise également une réduction nuancée des épaisseurs des différentes pièces afin d'optimiser un autre critère important du monde automobile, le critère de masse, tout en rigidifiant la structure de pied avant 30 par rapport aux solutions existantes.

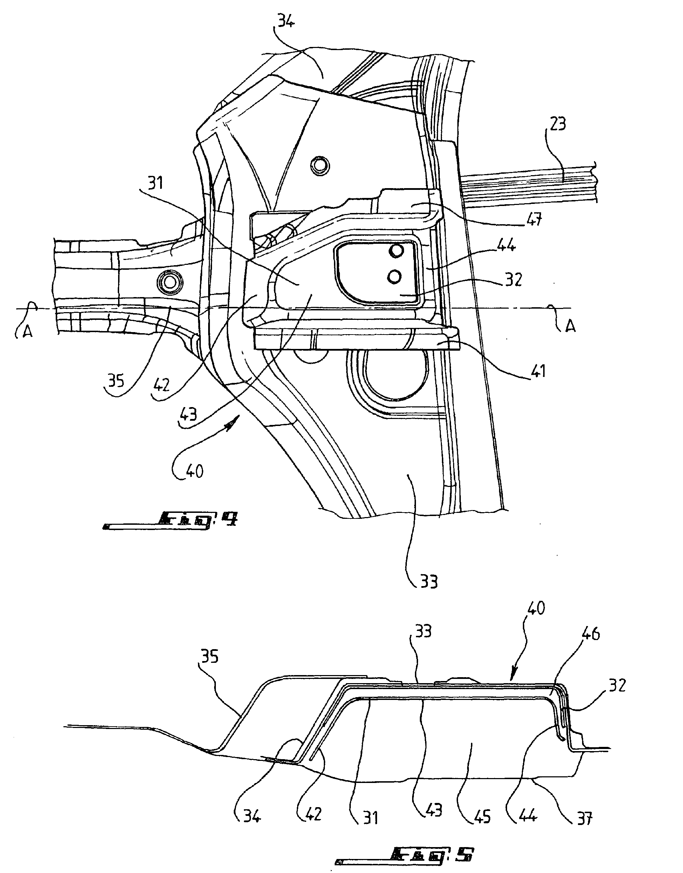

La figure 4 illustre une représentation particulière, tridimensionnelle, d'une structure de pied avant 40 selon le schéma de principe détaillé ci-dessus dans la figure 3. On retrouve les éléments suivants :
- le raidisseur 31 ;
- le renfort de charnière 32 ;
- le renfort 33 ;
- le coté d'habitacle 34 ;
- le renfort avant coté d'habitacle 35 ;

Suivant cette représentation particulière, lors d'un choc frontal, le renfort 33 n'est ni déformé ni vrillé ; il transmet alors correctement les efforts du choc frontal aux différentes zones de renforts visibles à la figure 2, telles que la frise de porte 23, le montant de baie 22 et le soubassement 25. Cette conception rigide du pied avant 40 annule, ou réduit sensiblement, la déformation de la frise de porte 23, du montant de baie 22 et du soubassement 25, permettant le respect des critères déméritant des constructeurs automobiles. Le raidisseur 31 présente trois pliures définies précédemment suivant un plan perpendiculaire à l'axe charnière, ainsi qu'une pluralité de pliures définies suivant une deuxième coupe du pied avant 40, selon l'axe charnière de la porte latérale avant, formant ainsi un espace fermé 45, visible à la figure 3, lorsque le raidisseur 31 est soudé contre la doublure d'aile avant 37.

Le raidisseur 31 comprend deux pliures 41 et 47 épousant la forme de la doublure d'aile avant 37 et permettant ainsi la fixation, notamment par soudure, dudit raidisseur sur la doublure d'aile avant 37.

La figure 5 est une représentation en coupe par rapport au plan de coupe A-A en référence à la figure 4, perpendiculaire à l'axe charnière de la porte latérale avant du véhicule.

La figure 5 permet de mieux comprendre la disposition des différents éléments ainsi que les zones de contact et de soudure entre les différentes pièces composant la structure du pied avant 40.

On retrouve ici un profil caractéristique du raidisseur 31 comprenant trois pliures 42, 43, 44 suivant les pliures du profil du renfort 33 ainsi que toutes les caractéristiques décrites lors de la description de la figure 3.

On peut remarquer toutefois, que le raidisseur ne forme pas un espace fermé avec la doublure d'aile 37 sur cette figure. En effet, la coupe du dessin 5 est réalisée à une hauteur donnée de l'axe charnière, où il n'y a pas de contact entre le raidisseur 31 et la doublure d'aile avant 37.

Ainsi, selon l'invention, on propose un dispositif de structure de pied avant d'un véhicule automobile comprenant notamment un raidisseur de forme particulière permettant de répondre efficacement aux efforts résultant d'un choc frontal et limitant la déformation de certaines zones du véhicule telles que le montant de baie et le soubassement, pour répondre aux critères d'acceptation de plus en plus sévères des constructeurs automobiles.

Les autres avantages de l'invention sont notamment les suivants :
- simplification des opérations de réalisation du pied avant ;
- réduction du nombre de pièces entrant dans la composition de la structure de pied avant.
- possibilité de nuancer les épaisseurs des pièces pour favoriser un critère de masse.

## Revendications

1. Structure de pied avant (30) d'un véhicule automobile comprenant :
- un renfort (33) ;
- une doublure d'aile avant (37) ;
- un raidisseur (31), ledit raidisseur (31) étant monobloc ;
**caractérisée en ce que** ledit raidisseur (31) comporte au moins une pliure (41, 47) épousant ladite doublure d'aile avant (37), coté extérieur du véhicule, et fixée directement à ladite doublure d'aile avant (37).

2. Structure de pied avant (30) d'un véhicule automobile selon la revendication 1 **caractérisée en ce que** ladite au moins une pliure (41, 47) est soudée à ladite doublure d'aile avant (37).

3. Structure de pied avant (30) d'un véhicule automobile selon l'une des revendications 1 ou 2 **caractérisée en ce que** ledit raidisseur (31) comporte une première pliure (41) et une deuxième pliure (47) épousant ladite doublure d'aile avant (37), coté extérieur du véhicule, et fixées directement à ladite doublure d'aile avant (37).

4. Structure de pied avant (30) d'un véhicule automobile selon l'une des revendications 1 à 3 **caractérisée en ce que** ledit raidisseur (31) est composé d'une pluralité de pliures (42, 43, 44) orientée suivant le profil dudit renfort (33).

5. Structure de pied avant (30) d'un véhicule automobile selon l'une des revendications 1 à 4 **caractérisée en ce que** ledit raidisseur (31) forme un espace unique (45) avec ladite doublure d'aile avant (37).

6. Structure de pied avant d'un véhicule automobile selon l'une des revendications 1 à 5 **caractérisée en ce que** ledit raidisseur (31) est localisé à proximité immédiate dudit renfort (33).

7. Structure de pied avant d'un véhicule automobile selon la revendication 7 **caractérisée en ce que** la distance, entre ledit raidisseur (31) et ledit renfort (33), est inférieure ou égale à 5mm.

## Claims

1. A-pillar structure (30) of an automobile vehicle, comprising:
- a reinforcement (33);
- a front wing lining (37);
- a stiffener (31), the said stiffener (31) being monoblock;
**characterized in that** the said stiffener (31) comprises at least one fold (41, 47) adapting itself to the said front wing lining (37), on the exterior side of the vehicle, and fixed directly to the said front wing lining (37).

2. A-pillar structure (30) of an automobile vehicle according to Claim 1, **characterized in that** the said at least one fold (41, 47) is welded to the said front wing lining (37).

3. A-pillar structure (30) of an automobile vehicle according to one of Claims 1 or 2, **characterized in that** the said stiffener (31) comprises a first fold (41) and a second fold (47) adapting themselves to the said front wing lining (37), on the exterior side of the vehicle, and fixed directly to the said front wing lining (37).

4. A-pillar structure (30) of an automobile vehicle according to one of Claims 1 to 3, **characterized in that** the said stiffener (31) is composed of a plurality of folds (42, 43, 44) oriented following the profile of the said reinforcement (33).

5. A-pillar structure (30) of an automobile vehicle according to one of Claims 1 to 4, **characterized in that** the said stiffener (31) forms a single space (45) with the said front wing lining (37).

6. A-pillar structure of an automobile vehicle according to one of Claims 1 to 5, **characterized in that** the said stiffener (31) is located in the immediate proximity to the said reinforcement (33).

7. A-pillar structure of an automobile vehicle according to Claim 7, **characterized in that** the distance between the said stiffener (31) and the said reinforcement (33) is less than or equal to 5 mm.

## Patentansprüche

1. Vordersäulenstruktur (30) eines Kraftfahrzeugs, Folgendes aufweisend:
- eine Verstärkung (33);
- ein Innenblech (37) des vorderen Kotflügels;
- eine Versteifung (31), wobei die Versteifung (31) einteilig ist;
**dadurch gekennzeichnet, dass** die Versteifung (31) mindestens eine Biegung (41, 47), die sich an das Innenblech (37) des vorderen Kotflügels schmiegt, auf der Außenseite des Fahrzeugs und direkt auf dem Innenblech (37) des vorderen Kotflügels befestigt aufweist.

2. Vordersäulenstruktur (30) eines Kraftfahrzeugs nach Anspruch 1, **dadurch gekennzeichnet, dass** die mindestens eine Biegung (41, 47) an das Innenblech (37) des vorderen Kotflügels geschweißt ist.

3. Vordersäulenstruktur (30) eines Kraftfahrzeugs nach einem der Ansprüche 1 oder 2, **dadurch gekennzeichnet, dass** die Versteifung (31) eine erste Biegung (41) und eine zweite Biegung (47) aufweist, die sich an das Innenblech (37) des vorderen Kotflügels auf der Außenseite des Fahrzeugs schmiegen und die direkt an dem Innenblech (37) des vorderen Kotflügels befestigt sind.

4. Vordersäulenstruktur (30) eines Kraftfahrzeugs nach einem der Ansprüche 1 bis 3, **dadurch gekennzeichnet, dass** die Versteifung (31) aus mehreren Biegungen (42, 43, 44) besteht, die entlang des Profils der Verstärkung (33) ausgerichtet sind.

5. Vordersäulenstruktur (30) eines Kraftfahrzeugs nach einem der Ansprüche 1 bis 4, **dadurch gekennzeichnet, dass** die Versteifung (31) einen einzigen Raum (45) mit dem Innenblech (37) des vorderen Kotflügels bildet.

6. Vordersäulenstruktur (30) eines Kraftfahrzeugs nach einem der Ansprüche 1 bis 5, **dadurch gekennzeichnet, dass** die Versteifung (31) in der unmittelbarer Nähe der Verstärkung (33) liegt.

7. Vordersäulenstruktur (30) eines Kraftfahrzeugs nach Anspruch 7, **dadurch gekennzeichnet, dass** die Entfernung zwischen der Versteifung (31) und der Verstärkung (33) kleiner oder gleich 5 mm ist.
